# EUROPEAN PATENT APPLICATION

(11) **EP 2 578 827 A1**
(43) Date of publication of application: **10.04.2013**
(21) Application number: 12173730.8
(22) Date of filing: 27.06.2012
(51) Int. Cl.: F01N 3/021, F01N 11/00

(54) **Exhaust gas treatment method**

(30) Priority: 06.10.2011 KR 20110102014
(71) Applicant: HYUNDAI MOTOR COMPANY, Seoul (KR); KIA Motors Corporation, Seoul (KR)
(72) Inventor: Lee, Jin Ha, Seoul (KR); Cho, Ji Ho, Yongin-si (KR)
(74) Representative: Viering, Jentschura & Partner

(57) **Abstract**

An exhaust gas treatment method having a particulate matter (PM) sensor on which a part of PM exhausted from a diesel particulate filter (DPF) may be attached and that generates a signal, may include determining a sensor trap PM model amount that may be trapped on the PM sensor in a condition that the diesel particulate filter may be operated normal according to an engine driving condition and a variation thereof, determining a sensor trap PM real amount that may be attached on the PM sensor by using the signal that may be generated from the PM sensor, and determining a condition of the diesel particulate filter by comparing the sensor trap PM model amount and the sensor trap PM real amount.

## Description

### CROSS-REFERENCE TO RELATED APPLICATION

The present application claims priority to Korean Patent Application No. 10-2011-0102014 filed in the Korean Intellectual Property Office on October 6, 2011, the entire contents of which is incorporated herein for all purposes by this reference.

### BACKGROUND OF THE INVENTION

### Field of the Invention

The present invention relates to an exhaust gas treatment method that effectively detects damage of a particulate filter that filters particulate matter (PM) included in exhaust gas.

### Description of Related Art

A diesel particulate filter (DPF) has been being applied to a diesel vehicle so as to reduce PM thereof, and a pressure difference sensor is applied to detect a PM amount that is trapped in the diesel particulate filter.

In the future, a pressure difference sensor will not be used to detect damage of a DPF according to exhaust gas regulations, and further, the detection precision of the pressure difference sensor is low.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY

Various aspects of the present invention are directed to providing an exhaust gas treatment method having advantages of accurately detecting an amount of soot that is slipped from a particulate filter and using the detected signal to accurately detect damage of the particulate filter.

In an aspect of the present invention, an exhaust gas treatment method having a particulate matter (PM) sensor on which a part of PM exhausted from a diesel particulate filter (DPF) is attached and that generates a signal, may include determining a sensor trap PM model amount that is trapped on the PM sensor in a condition that the diesel particulate filter is operated normal according to an engine driving condition and a variation thereof, determining a sensor trap PM real amount that is attached on the PM sensor by using the signal that is generated from the PM sensor, and determining a condition of the diesel particulate filter by comparing the sensor trap PM model amount and the sensor trap PM real amount.

The diesel particulate filter is determined to be damaged when a difference between the PM trap real amount and the PM trap model is larger than a predetermined value.

The exhaust gas treatment method may further include determining a total PM flow rate that is generated from an engine, and determining a filter slip PM flow rate by using the total PM flow rate and a trap efficiency of the DPF to determine the sensor trap PM model amount.

The total PM flow rate is determined by using a rotation speed of the engine, a fuel injection amount, an engine torque, and an Exhaust Gas Recirculation (EGR) rate of the engine.

The trap efficiency is determined by a PM trap amount that is trapped in the diesel particulate filter, an exhaust gas flow rate of the engine, and a front temperature of the diesel particulate filter.

The sensor trap PM model amount is determined by a filter slip PM total amount that is determined by the filter slip PM flow rate.

The filter slip PM total amount is determined after eliminating the PM that is attached to the PM sensor.

The PM that is attached to the PM sensor is eliminated by a heater that is disposed near the PM sensor.

The PM sensor may include electrodes that are formed along a predetermined line, and generates the signal according to amount of the PM that is attached between the electrodes.

In an exemplary embodiment of the present invention for realizing the above objects, damage of the diesel particulate filter that is difficult to detect by a pressure difference thereof is further accurately detected.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG 1 is a schematic diagram of an exhaust gas treatment system according to an exemplary embodiment of the present invention.

FIG. 2 is a flowchart showing an exhaust gas treatment method according to an exemplary embodiment of the present invention.

FIG. 3 shows overall operational logic of an exhaust gas treatment method according to an exemplary embodiment of the present invention.

FIG. 4 shows operational logic that calculates a total flow rate of PM that is generated from an engine in an exhaust gas treatment method according to an exemplary embodiment of the present invention.

FIG. 5 shows operational logic that calculates trap efficiency of a particulate filter in an exhaust gas treatment method according to an exemplary embodiment of the present invention.

FIG. 6 shows operational logic for determining a malfunction of a particulate filter in an exhaust gas treatment method according to an exemplary embodiment of the present invention.

FIG. 7 shows operational logic for calculating a particulate filter amount trapped on an electrode in an exhaust gas treatment method according to an exemplary embodiment of the present invention.

FIG. 8 is a graph showing signals of a PM sensor in an exhaust gas treatment method according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that the present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

An exemplary embodiment of the present invention will hereinafter be described in detail with reference to the accompanying drawings.

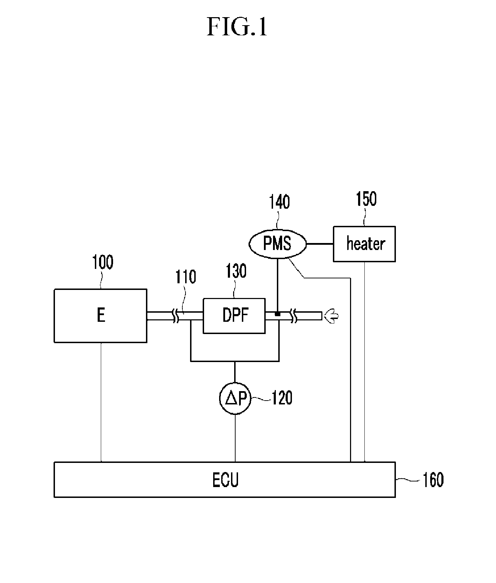

FIG. 1 is a schematic diagram of an exhaust gas treatment system according to an exemplary embodiment of the present invention.

Referring to FIG. 1, an exhaust gas treatment system includes an engine 100, an exhaust line 110, a diesel particulate filter 130, a PM sensor 140, a heater 150, a pressure difference sensor 120, and a control portion 160.

The exhaust gas that is generated from the engine 100 is exhausted to the outside through the exhaust line 110, and the diesel particulate filter 130 traps PM (particulate matter) included in the exhaust gas.

The pressure difference sensor 120 detects a front and rear pressure difference of the diesel particulate filter 130, and the PM trapped in the diesel particulate filter 130 is periodically eliminated by an exhaust gas temperature control flow based on the detected signal.

A part of the PM that is supplied or slipped from the diesel particulate filter 130 becomes attached to the PM sensor 140, and the PM sensor generates a sensor signal depending on the PM amount that is attached to the PM sensor 140.

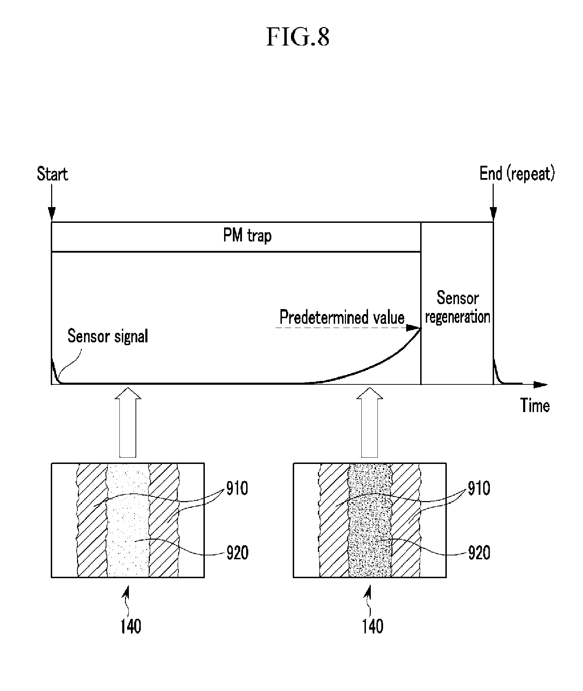

The heater 150 is disposed near the PM sensor 140 and periodically burns the PM 920 (see FIG. 8) that is attached to the PM sensor 140. Further, the control portion 160 performs an exhaust gas treatment method according to an exemplary embodiment of the present invention.

The PM sensor 140 and the pressure difference sensor 120 are used to detect a condition of the diesel particulate filter 130 in an exemplary embodiment of the present invention. Accordingly, damage of the diesel particulate filter 130 is more accurately detected.

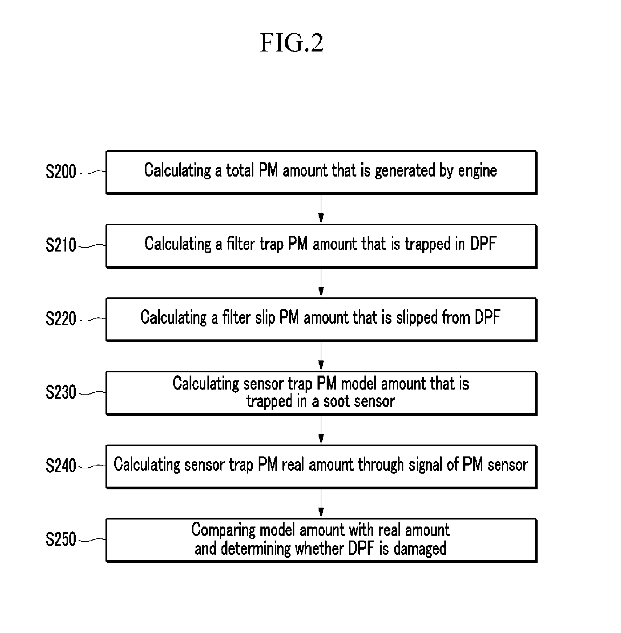

FIG. 2 is a flowchart showing an exhaust gas treatment method according to an exemplary embodiment of the present invention.

Referring to FIG. 2, a total PM amount that is generated from the engine 100 is calculated in step S200. A filter trap PM amount that is trapped in the diesel particulate filter (130, DPF) is calculated in step S210.

A filter slip PM amount that is exhausted or slipped from the diesel particulate filter 130 is calculated in step S220. The filter slip PM amount that is slipped from the diesel particulate filter 130 is used to calculate a sensor trap PM model amount that is trapped on the PM sensor 140 in step S230.

A real sensor signal that is generated from the PM sensor 140 is used to calculate a sensor trap PM real amount in step S240. The sensor trap PM model amount and the sensor trap PM real amount are compared in step S250 to determine a condition of the diesel particulate filter 130.

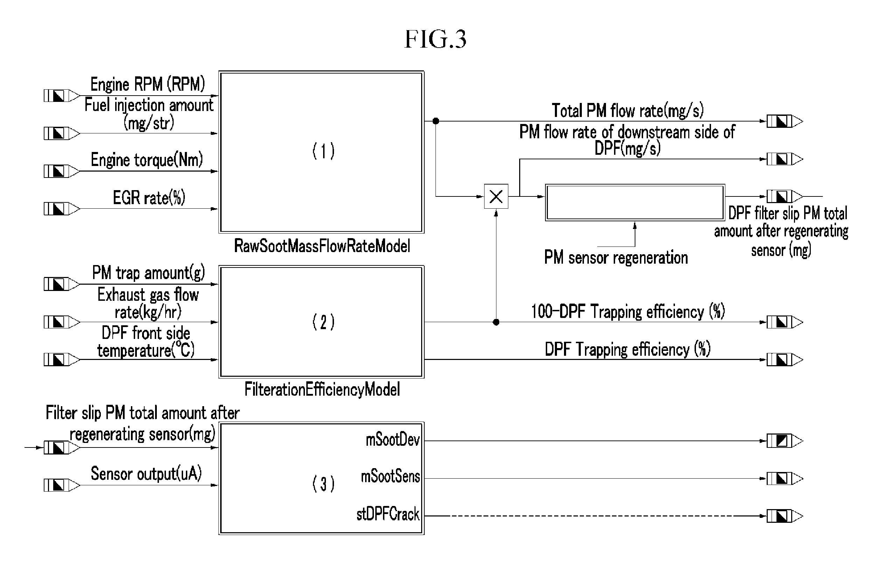

FIG. 3 shows overall operational logic of an exhaust gas treatment method according to an exemplary embodiment of the present invention.

Unit (1) performs a program for calculating a total PM amount that is generated from the engine. A rotation speed of the engine, a fuel injection amount, an engine torque, an EGR rate, and so on are inputted into the unit (1), these variables are used to calculate the total PM flow rate, and the trap efficiency of the diesel particulate filter 130 that is calculated in unit (2) is used to calculate a filter slip PM amount that is slipped from the diesel particulate filter 130. Further, after the PM sensor 140 is regenerated, a total filter slip PM amount that is exhausted from the diesel particulate filter 130 is calculated.

Unit (2) is used for calculating trap efficiency of the diesel particulate filter 130, wherein a PM trap amount of the diesel particulate filter 130, an exhaust gas flow rate, a front temperature of the diesel particulate filter 130, and so on are used to calculate the trap efficiency of the diesel particulate filter 130.

After the regeneration of the PM sensor, the filter slip PM total amount that is exhausted from the diesel particulate filter 130 and the sensor signal that is outputted from the PM sensor 140 are used to determine a condition of the diesel particulate filter 130 in unit (3).

Particularly, the filter slip PM total amount is used to calculate a sensor trap model amount that is trapped on the PM sensor 140, and the sensor signal is used to calculate a sensor trap real amount that is actually trapped on the PM sensor 140. The sensor trap model amount and the sensor trap real amount are compared, and if the difference thereof exceeds a predetermined value, it is determined that the diesel particulate filter 130 is damaged.

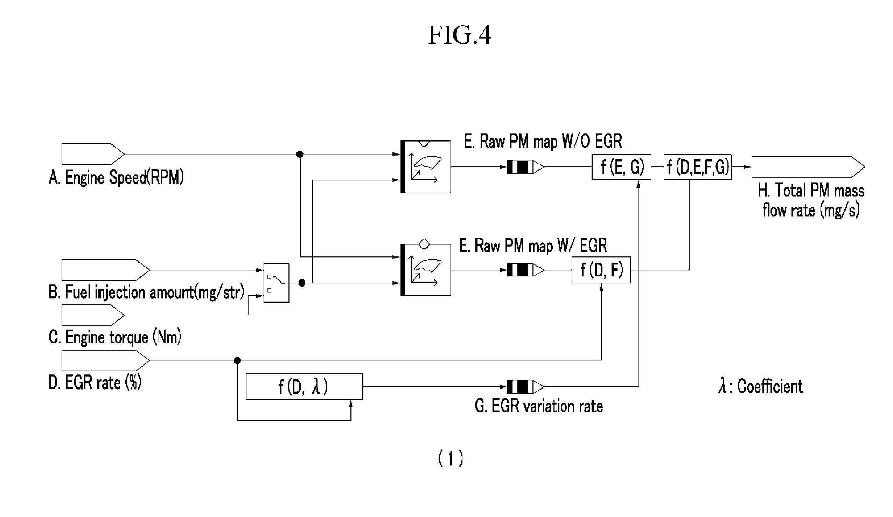

FIG. 4 shows operational logic that calculates a total flow rate of PM that is generated from an engine in an exhaust gas treatment method according to an exemplary embodiment of the present invention.

Referring to FIG. 4, a rotation speed (A) of the engine, a fuel injection amount (B), an engine torque (C), and an EGR rate (D) are inputted to a first map (E) in a condition without EGR in which exhaust gas is not recirculated (Raw PM map W/O EGR), a second map (E) in a condition with EGR in which exhaust gas is recirculated (Raw PM map W EGR), and a change rate (G) of EGR (exhaust gas recirculation) are used to determine a total PM flow rate (H) (Raw PM generation mass flow rate (mg/s)).

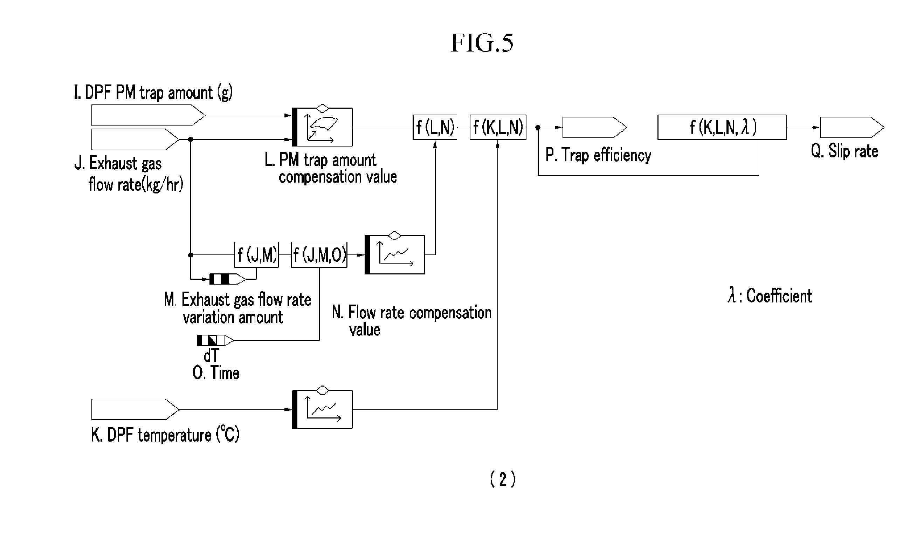

FIG. 5 shows operational logic that calculates trap efficiency of a particulate filter in an exhaust gas treatment method according to an exemplary embodiment of the present invention.

Referring to FIG. 5, a trap amount (I) of the diesel particulate filter 130, an exhaust gas flow rate (J) of the engine 100, and a front temperature (K) of the diesel particulate filter 130 are inputted, an exhaust gas flow rate variation amount (M) and time (O) are used to calculate flow compensation value (N), and a trap amount compensation value (L), a flow amount compensation value (N), and a temperature curve are used to calculate trap efficiency (P). Further, the trap efficiency (P) is used to calculate a slip ratio (Q).

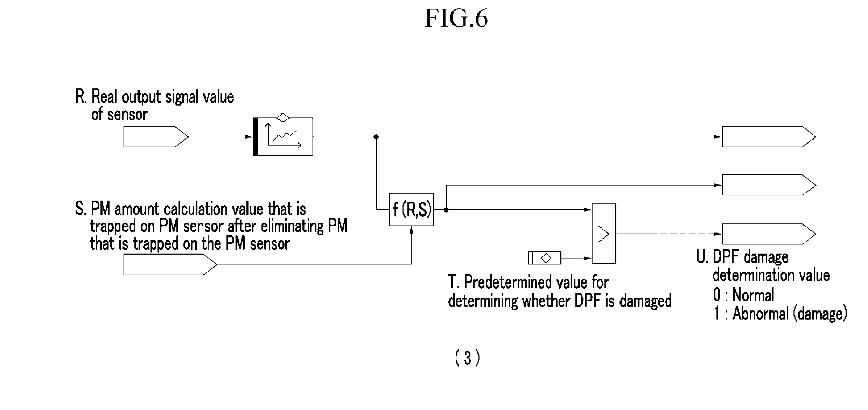

FIG. 6 shows operational logic for determining a malfunction of a particulate filter in an exhaust gas treatment method according to an exemplary embodiment of the present invention.

A real sensor output signal value (R) as a sensor signal of the PM sensor 140 and a PM trap amount (S) that is trapped on the PM sensor after the PM sensor 140 is regenerated are input.

A PM trap real amount is calculated from the R value, a PM trap model amount is calculated from the S value, and a difference value between the PM trap real amount and the PM trap model amount is used to determine damage of the diesel particulate filter 130. Here, the difference value is compared with a predetermined value (T). If the difference value is larger than a predetermined value (T), 1 is outputted, and if the difference value is less than that, 0 is outputted.

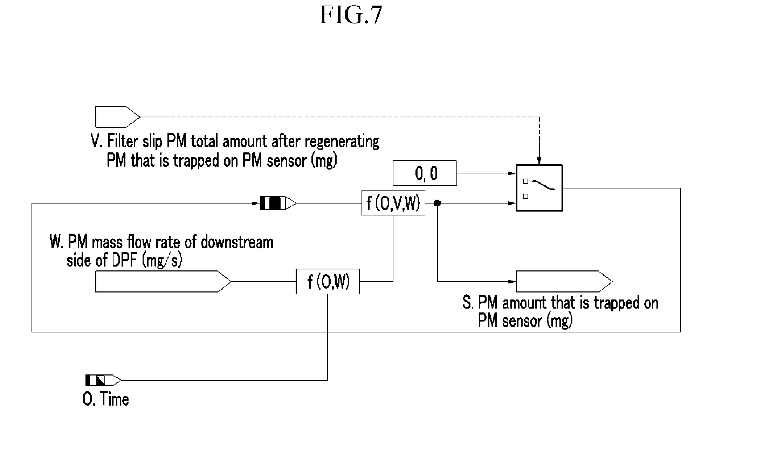

FIG. 7 shows operational logic for calculating a particulate filter amount trapped on an electrode in an exhaust gas treatment method according to an exemplary embodiment of the present invention.

Referring to FIG. 7, after the PM trapped on the PM sensor 140 is eliminated (regenerated), a filter slip PM total amount (V) that is exhausted from the diesel particulate filter 130, an PM flow amount (W) that is exhausted from the diesel particulate filter 130, and a time (O) are used to calculate a sensor trap model amount (S) that is trapped on the PM sensor 140.

FIG. 8 is a graph showing signals of a PM sensor in an exhaust gas treatment method according to an exemplary embodiment of the present invention.

Referring to FIG. 8, a horizontal axis denotes a time and a vertical axis denotes a sensor signal that is generated from the PM sensor 140. PM 920is attached to an electrode 910 of the PM sensor 140, and as time passes, the attached amount of the PM 920 is increased.

Accordingly, intensity or frequency of the sensor signal that is generated from the PM sensor 140 is increased, and if the value of the sensor signal reaches a predetermined threshold value, the PM sensor 140 is periodically regenerated by the heater 150.

The PM sensor 140 includes a plurality of electrodes 910, and if the PM is attached between the electrodes 910, electricity flows between the electrodes 910 such that the size of the sensor signal that is generated from the PM sensor 140 is increased or decreased.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. An exhaust gas treatment method having a particulate matter (PM) sensor on which a part of PM exhausted from a diesel particulate filter (DPF) is attached and that generates a signal, comprising:
determining a sensor trap PM model amount that is trapped on the PM sensor in a condition that the diesel particulate filter is operated normal according to an engine driving condition and a variation thereof;
determining a sensor trap PM real amount that is attached on the PM sensor by using the signal that is generated from the PM sensor; and
determining a condition of the diesel particulate filter by comparing the sensor trap PM model amount and the sensor trap PM real amount.

2. The exhaust gas treatment method of claim 1, wherein the diesel particulate filter is determined to be damaged when a difference between the PM trap real amount and the PM trap model is larger than a predetermined value.

3. The exhaust gas treatment method of claim 1, further comprising:
determining a total PM flow rate that is generated from an engine; and
determining a filter slip PM flow rate by using the total PM flow rate and a trap efficiency of the DPF to determine the sensor trap PM model amount.

4. The exhaust gas treatment method of claim 3, wherein the total PM flow rate is determined by using a rotation speed of the engine, a fuel injection amount, an engine torque, and an Exhaust Gas Recirculation (EGR) rate of the engine.

5. The exhaust gas treatment method of claim 3, wherein the trap efficiency is determined by a PM trap amount that is trapped in the diesel particulate filter, an exhaust gas flow rate of the engine, and a front temperature of the diesel particulate filter.

6. The exhaust gas treatment method of claim 3, wherein the sensor trap PM model amount is determined by a filter slip PM total amount that is determined by the filter slip PM flow rate.

7. The exhaust gas treatment method of claim 6, wherein the filter slip PM total amount is determined after eliminating the PM that is attached to the PM sensor.

8. The exhaust gas treatment method of claim 7, wherein the PM that is attached to the PM sensor is eliminated by a heater that is disposed near the PM sensor.

9. The exhaust gas treatment method of claim 1, wherein the PM sensor includes electrodes that are formed along a predetermined line, and generates the signal according to amount of the PM that is attached between the electrodes.
